# EUROPÄISCHE PATENTSCHRIFT

(11) **EP 2 962 012 B1**
(45) Veröffentlichungstag und Bekanntmachung des Hinweises auf die Patenterteilung: **20.02.2019**
(21) Anmeldenummer: 14707135.1
(22) Anmeldetag: 27.02.2014
(51) Int. Cl.: F16C 19/26, F16C 19/46, F16C 33/66, F16C 33/60, F16C 33/62, F16F 15/26, F16C 33/46, F16C 33/58

(54) **AUSGLEICHSWELLE**
BALANCING SHAFT
ARBRE D'ÉQUILIBRAGE

(30) Priorität: 01.03.2013 DE 202013100896 U
(43) Veröffentlichungstag der Anmeldung: 06.01.2016
(73) Patentinhaber: Schmidt Automotive GmbH, 73463 Westhausen (DE); Herzog Intertec GmbH, 78601 Mahlstetten (DE)
(72) Erfinder: SCHMIDT, Herbert, 73463 Westhausen-Lippach (DE); HERZOG, Raphael, 78601 Mahlstetten (DE)
(74) Vertreter: Mammel und Maser
(86) Internationale Anmeldenummer: PCT/EP2014/053782
(87) Internationale Veröffentlichungsnummer: WO 2014/131814

(56) Entgegenhaltungen:
- EP-A1- 2 287 493
- EP-A1- 2 287 493
- EP-A1- 2 700 841
- WO-A1-2012/144552
- DE-A1-102007 027 990
- DE-A1-102007 027 990
- DE-A1-102008 015 135
- DE-A1-102008 015 135

## Beschreibung

### Ausgleichswelle

Die Erfindung betrifft eine Ausgleichswelle für einen Verbrennungsmotor zum Ausgleich von freien Massenkräften und/oder Massenmomenten.

Aus der DE 10 2008 015 135 A1 ist eine Unwuchtwelle, insbesondere zum Ausgleich von freien Massenkräften und/oder Massenmomenten einer Hubkolben-Brennkraftmaschine bekannt, welche wenigstens einen Unwuchtgewichtsabschnitt und wenigstens eine Lagerstelle aufweist, die einen Lagersitz zur Lagerung eines Radiallagers umfasst, wobei der Lagersitz eine Lauffläche aufweist, die sich nur teilweise über einen Umfang der Lagerstelle erstreckt sowie eine Freinehmung umfasst, wobei im Bereich der Freinehmung die Lagerstelle eine Lagerschale umfasst, welche zum Lagersitz positioniert ist. Zur Fixierung der Lagerschale zum Lagersitz ist eine Schraubverbindung vorgesehen, durch welche die Lagerschale in einer festen Position zum Lagersitz fixiert ist. Zur sicheren Aufnahme und Positionierung ist im mittleren Bereich des Lagersitzes eine Erhöhung beziehungsweise ein Dom ausgebildet, der sich entgegengesetzt zur Lastzone der Lagerstelle erstreckt, um das Befestigungsmittel aufzunehmen. Zwar wird durch den Einsatz einer Lagerschale aus einem Kunststoff oder einem Sintermaterial eine Gewichtseinsparung erzielt, jedoch weist die Lagerstelle aufgrund des Doms eine Materialanhäufung auf, wodurch eine massive Lagerstelle gebildet ist.

Aus der DE 10 2007 027 990 A1 ist eine Ausgleichswelle zum Ausgleich von freien Massenkräften bekannt, bei welcher eine Lagerschale und eine partiell ausgebildete Lauffläche einen Lagersitz bilden. Die Lagerschale ist dabei durch eine stoffschlüssige Verbindung mit dem Grundkörper zur Bildung des Lagersitzes verbunden. Eine analoge Ausgleichswelle geht aus der EP 2 287 493 A1 hervor.

Der Erfindung liegt die Aufgabe zugrunde, eine Ausgleichswelle zu schaffen, deren Lagerstelle gewichtsreduzierend ist und dennoch eine gesicherte Aufnahme eines Radiallagers ermöglicht ist.

Diese Aufgabe wird durch eine Ausgleichswelle gelöst, bei welcher die Lagerschale lose am Grundkörper zum Lagersitz vorgesehen ist. Dadurch wird ermöglicht, dass der Grundkörper im Bereich der Rotationsachse und/oder bezüglich der Freinehmung frei gestaltbar ist, wodurch eine Gewichtseinsparung ermöglicht wird. Darüber hinaus entfällt im Vergleich zum Stand der Technik die zusätzliche Beschaffung und Montage eines Befestigungsmittels, die zeit- und kostenintensiv ist. Durch die Ausgestaltung einer Freinehmung zum Lagersitz kann die Gewichtsreduzierung optimiert werden, wobei gleichzeitig durch die Positionierung einer Lagerschale das Radiallager, insbesondere ein Nadellager, gesichert aufgenommen werden kann.

Bevorzugt ist vorgesehen, dass die lose an dem Grundkörper anliegende Lagerschale durch das Radiallager zur Grundkörper positionierbar ist. Erstaunlicherweise hat sich gezeigt, dass die Positionierung und Anordnung der Lagerschale zum Grundkörper über das Radiallager genügt und eine befestigungsmittelfreie Anordnung der Lagerschale zur Freinehmung am Grundkörper die Anforderungen an die Lebensdauer erfüllen.

Die in der Freinehmung zum Lagersitz der Lagerstelle angeordnete Lagerschale erstreckt sich vorteilhafterweise außerhalb einer Lastzone der Lagerstelle. Dabei kann beispielsweise vorgesehen sein, dass der Lagersitz einen Umfangswinkel von 180° umfasst. Alternativ kann auch vorgesehen sein, dass der Umfangswinkel der Lauffläche des Lagersitzes sowohl kleiner 180° als auch größer 180° ist und der Umfangswinkel der Lagerschale entsprechend angepasst ist.

Der Umfangswinkel der Stützfläche der Lagerschale ist bevorzugt kleiner als ein Umfangswinkel einer Freinehmung des Lagersitzes. Dadurch wird die Lagerschale quasi mit Spiel zum Grundkörper als auch mit Spiel zur Radiallagerung positioniert. Dies ermöglicht insbesondere bei höheren Betriebstemperaturen eine spannungsfreie Anordnung.

Alternativ kann vorgesehen sein, dass die Lauffläche des Lagersitzes und die Stützfläche der Lagerschale eine quasi geschlossene Umfangsfläche der Lagerstelle bilden, die eine übliche Lagerluft aufweist, wie dies bei einem Volllager der Fall ist. In einzelnen Anwendungsbereichen kann sich diese Ausführungsform als vorteilhaft erweisen.

Die Stützfläche der Lagerschale ist in axialer Richtung bevorzugt durch einen Radialvorsprung begrenzt, der sich zumindest teilweise über den Umfang der Lagerschale erstreckt. Durch die vorzugsweise beidseitige Begrenzung der Stützflächen in axialer Richtung kann die Lagerschale in axialer Richtung gesichert zum Radiallager geführt und positioniert werden.

Die Lauffläche des Lagersitzes ist in axialer Richtung durch einen Radialvorsprung begrenzt, der insbesondere durch einen Unwuchtgewichtsabschnitt ausgebildet ist. Dadurch kann das Radiallager in axialer Richtung zur Lagerstelle gesichert aufgenommen werden, so dass durch diese gesicherte Führung des Radiallagers wiederum die Lagerschale über das Radiallager zur Lagerstelle gesichert positionierbar ist.

Eine weitere bevorzugte Ausführungsform sieht vor, dass die Stützfläche der Lagerschale eine raue Oberfläche, Sicken oder Vertiefungen in der Oberfläche aufweist. Beim Einsatz von Radiallagern erweist sich dies von Vorteil, da der Schmiermittelnebel besser an der Stützfläche anhaftet und somit eine sichere Schmierung bei geringer Reibung ermöglicht.

Alternativ kann vorgesehen sein, dass die Stützfläche der Lagerschale zumindest eine Durchbrechung aufweist. Dadurch wird wiederum eine gute Zugänglichkeit des Schmiermittels oder des Schmiermittelnebels zur Stützfläche geschaffen.

Die Lagerschale weist bevorzugt an den freien Enden eine ebene Aufstandsfläche zur Anlage am Grundkörper auf. Dadurch kann eine gute Abstützung der Lagerschale ermöglicht sein.

Des Weiteren ist bevorzugt vorgesehen, dass eine oder zwei Unwuchtgewichtsabschnitte unmittelbar an die Lagerstelle angrenzen und jeweils einen Radialvorsprung bilden, so dass die Lauffläche des Lagersitzes gegenüber der Umfangsfläche der Unwuchtgewichtsabschnitte derart vertieft ist, dass das Radiallager radial zumindest geringfügig nach außen gegenüber der Umfangsfläche des Unwuchtgewichtsabschnitts hervorsteht. Dies ermöglicht einerseits eine axiale Führung des Radiallagers und andererseits eine kleinbauende Ausgleichswelle mit einer maximalen Unwucht.

Eine weitere alternative Ausführungsform der Erfindung sieht vor, dass die freien Enden der Lagerschale zumindest abschnittsweise in einer Vertiefung, insbesondere taschenförmige Vertiefung, der Auflagefläche des Grundkörpers positionierbar, insbesondere in axialer Richtung fixierbar, sind. Diese Ausführungsform ermöglicht, dass die Lagerschale in axialer Richtung zur Lagerstelle gehalten werden kann, jedoch lose einsetzbar bleibt. Diese Ausführungsform ermöglicht vorteilhafterweise, dass die Lagerschale ausschließlich eine Stützfläche aufweist, ohne dass zusätzlich Radialvorsprünge die Stützfläche begrenzen.

Das Radiallager ist gemäß einer ersten Ausführungsform bevorzugt als eine Gleitlagerung ausgebildet und weist vorteilhafterweise geteilte Gleitlagerschalen auf.

Das Radiallager ist gemäß einer weiteren bevorzugten Ausführungsform als Wälzlagerung ausgebildet, wobei bevorzugt ein Nadellager ohne Innenring vorgesehen ist, das einen öffenbaren oder spreizbaren Nadelkäfig beziehungsweise einen Nadelkäfig mit einer Clipsverbindung aufweist. Alternativ kann auch ein geteiltes Wälzlager vorgesehen sein. Durch die Lagerschale werden die Wälzlager im Bereich der Freinehmung gestützt, so dass ein gesicherter Umlauf der Wälzkörper gegeben ist.

Bevorzugt ist vorgesehen, dass zur Wälzlagerung ein öffenbarer oder spreizbarer Nadelkäfig eingesetzt wird, um eine einfache Montage zu ermöglichen. Bevorzugt wird beim Einsatz von Nadelhülsen ein Nadelkäfig aus Kunststoff gewählt. Dadurch kann nicht nur eine Gewichtsreduzierung erzielt werden, sondern insbesondere auch eine verschleißarme Ausgestaltung bei der Verwendung der Lagerschalen aus Kunststoff ermöglicht sein.

Bevorzugt ist vorgesehen, dass der Nadelkäfig der Wälzlagerung durch die Radialvorsprünge des Lagersitzes in axialer Richtung zum Grundkörper geführt ist und vorzugsweise die Lagerschale über deren Radialvorsprünge durch den Nadelkäfig positioniert gehalten ist. Dadurch kann in axialer Weise eine axiale Positionierung der losen Lagerschale zum Grundkörper ermöglicht werden.

Des Weiteren ist bevorzugt vorgesehen, dass die Lagerschale zumindest in dem der maximal wirkenden Last in der Lastzone gegenüberliegenden Bereich, insbesondere in einer 12-Uhr-Position, eine Aussparung zur Unterbrechung der Radialvorsprünge aufweist. Diese Unterbrechung hat zur Folge, dass im Bereich der Unterbrechung eine Art Gelenk ausgebildet ist, so dass bei einer Radialkraftkomponente, die auf diesen Bereich beispielsweise bei Beschleunigen der Ausgleichswelle aus dem Stillstand wirken kann, ermöglicht wird, dass die freien Enden der Lagerschale sich in radialer Richtung, also nach außen, aufspreizen. Dadurch kann beim Übergang von der Lagerschale auf den Lagersitz des Grundkörpers ein sanfter Einlauf der Wälzkörper erzielt werden. Darüber hinaus kann dieser Effekt zur Verbesserung der Anlaufruhe als auch zur Optimierung der Laufruhe insgesamt führen. Vorteilhafterweise kann die Aussparung zur Unterbrechung der Radialvorsprünge in einer beispielsweise 10-Uhr- und 2-Uhr-Position oder 11-Uhr- und 1-Uhr-Position oder dergleichen vorgesehen sein. Diese Aussparungen können auch zusätzlich zur 12-Uhr-Position oder alle zusammen vorgesehen sein, wodurch eine Art Mehrfachgelenk geschaffen wird, um eine bessere Aufspreizung der freien Enden der Lagerschale zu erzielen. Dabei genügt bereits eine Aufspreizung von weniger als 100 µm um eine Optimierung zu erzielen.

Eine weitere Ausführungsform der Erfindung sieht vor, dass in einem Übergangsbereich zwischen dem Lagersitz und der Lagerschale die Stützfläche und die Lauffläche gegenüber einer Umlaufbahn von Wälzkörpern eine zur Rotationsachse weisende Krümmung vorgesehen ist und das jeweilige Ende beziehungsweise der jeweilige Beginn der Lauffläche beziehungsweise Stützfläche gegenüber der Umlaufbahn der Wälzkörper zurückgesetzt sind. Vorzugsweise ist eine parabelförmige Krümmung vorgesehen. Diese Anordnung weist den Vorteil auf, dass ein Übergangsbereich geschaffen wird, bei welchem ein weiches Einlaufen oder Einrollen der Wälzkörper ermöglicht wird.

Gemäß einer weiteren bevorzugten Ausführungsform der Erfindung ist vorgesehen, dass die Lagerschale einen gestuften Radialvorsprung mit einer radial ausgerichteten Gleitfläche aufweist, die zur Stützfläche hin ausgerichtet ist und auf der ein Randbereich des Nadelkäfigs aufliegt. Diese Ausführungsform ermöglicht, dass die Lagerschale über einen Randbereich des Nadelkäfigs geführt und positioniert wird.

Eine weitere bevorzugte Ausgestaltung dieser alternativen Ausführungsform sieht vor, dass die Gleitfläche am gestuften Radialvorsprung in einem Abstand zur Stützfläche vorgesehen ist, so dass die Wälzkörper frei bzw. mit Abstand zur Stützfläche angeordnet sind. Durch das Aufliegen des Nadelkäfigs auf der Gleitfläche können somit die Wälzkörper mit einem zumindest geringen Spalt zur Stützfläche positioniert sein. Dadurch kann die Form und/oder Oberfläche der Stützfläche frei gestaltet werden.

Eine weitere bevorzugte Ausgestaltung der Erfindung sieht vor, dass in einem Übergangsbereich zwischen dem Lagersitz und der Lagerschale die Gleitfläche des Radialvorsprungs gegenüber einer Umlaufbahn der Wälzkörper eine zur Rotationsachse weisende Krümmung aufweist, die gegenüber der Umlaufbahn der Wälzkörper oder des Nadelkäfigs zurückgesetzt ist. Dadurch wird ein sanftes Einlaufen des Nadelkäfigs auf die Gleitfläche der Radialvorsprünge ermöglicht.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer erfindungsgemäßen Ausgleichswelle,
Figur 2 eine schematische Seitenansicht der Ausgleichswelle gemäß Figur 1,
Figur 3 eine schematische Schnittdarstellung entlang der Linie II-II in Figur 2,
Figur 4 einen schematischen Längsschnitt der Lagerstelle,
Figuren 5a und 5b perspektivische Ansichten einer ersten Ausführungsform einer Lagerschale,
Figuren 6a und 6b perspektivische Ansichten einer alternativen Ausführungsform der Lagerschale zu Figur 5,
Figuren 7a und 7b perspektivische Ansichten einer weiteren alternativen Ausführungsform einer Lagerschale zu Figur 5,
Figur 8 eine schematisch vergrößerte Schnittansicht eines Teilbereichs A in Figur 3,
Figur 9a und 9b eine perspektivische und schematische Ansicht einer weiteren alternativen Ausführungsform,
Figur 10 eine schematisch vergrößerte Schnittdarstellung einer weiteren alternativen Ausführungsform,
Figur 11 eine schematische Seitenansicht einer Lagerschale gemäß Figur 10,
Figur 12 eine schematische Schnittdarstellung entlang der Linie XII-XII in Figur 11 und
Figur 13 ein schematisch vergrößertes Detail B in Figur 12.

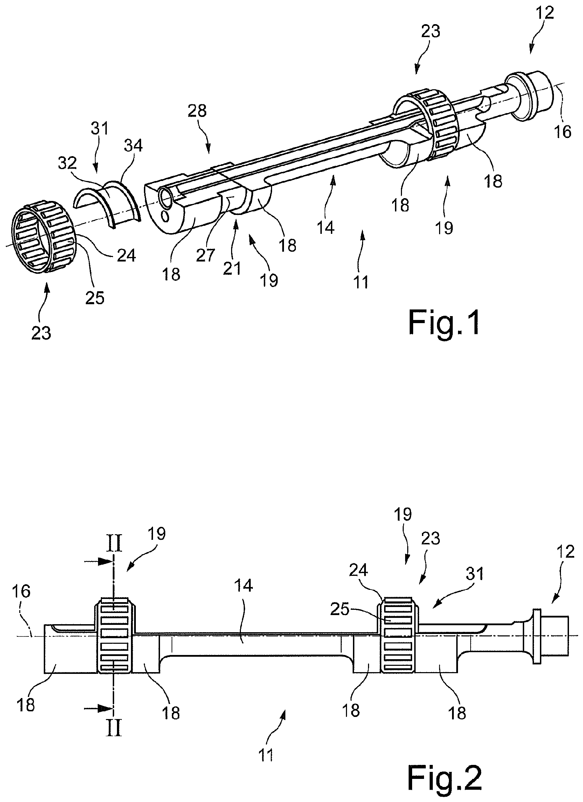

In Figur 1 ist eine Ausgleichswelle 11 dargestellt, welche auch als Unwuchtwelle bezeichnet wird. Diese Ausgleichswelle 11 dient zum Ausgleich von freien Massenkräften und/oder Massenmomenten einer nicht näher dargestellten Hubkolben-Brennkraftmaschine. Diese Ausgleichswellen 11 werden über einen Kurbeltrieb angetrieben. Üblicherweise werden zwei Ausgleichswellen 11 versetzt zueinander angeordnet und in doppelter Motordrehzahl gegenläufig rotierend angetrieben.

Die Ausgleichswelle 11 weist einen hinteren Endabschnitt 12 auf, an dem ein nicht näher dargestellter Antrieb, wie beispielsweise ein Kettenrad, vorgesehen ist, um die Ausgleichswelle 11 rotierend anzutreiben. Die Ausgleichswelle 11 umfasst einen Grundkörper 14, der um eine Rotationsachse 16 rotiert. Der Grundkörper 14 besteht aus zumindest einem Unwuchtgewichtsabschnitt 18, der einem Lagersitz 19 zugeordnet ist. Im Ausführungsbeispiel weist die Ausgleichswelle 11 beispielsweise zwei Lagerstellen 19 auf. Alternativ kann auch nur eine Lagerstelle 19 vorgesehen sein. Durch die Lagerstelle 19 wird die Ausgleichswelle 11 rotierend im Motorgehäuse des Motorblocks aufgenommen.

Die Ausgleichswelle 11 ist beispielsweise einstückig durch einen Guss- oder Schmiedevorgang ausgebildet. Alternativ kann auch vorgesehen sein, dass die Unwuchtgewichtsabschnitte 18 getrennt ausgebildet und an dem Grundkörper 14 befestigt werden.

Die Lagerstelle 19 der Ausgleichswelle 11 umfasst einen Lagersitz 21 zur Lagerung eines Radiallagers 23, welches im Ausführungsbeispiel als ein Nadelkranz mit einem Nadelkäfig 24 und dadurch geführten Wälzkörpern 25, insbesondere Nadelrollen, ausgebildet ist. Das Radiallager 23 wird durch den Lagersitz 21 aufgenommen und geführt. Der Lagersitz 21 umfasst eine Lauffläche 27, welche sich im Bereich einer Lastzone erstreckt. Der Lagersitz 21 umfasst eine Freinehmung 28, die außerhalb der Lastzone ausgebildet ist. Die Freinehmung 28 wird durch den Umfangswinkel der Lauffläche 27 bestimmt, die beispielsweise einen Umfangswinkel von 180° aufweist. Dadurch ist der Lagersitz 21 im Querschnitt gesehen quasi halbkreisförmig ausgebildet. An die Lauffläche 27 angrenzend ist eine Auflagefläche 29 am Grundkörper 14 vorgesehen, auf welchem eine Lagerschale 31 aufliegt, die sich zumindest teilweise über den Umfang der Freinehmung 28 erstreckt oder die mit dem Lagersitz 21 die Lagerstelle 19 bildet.

Die rechte Lagerstelle 19 gemäß Figur 1 zeigt eine komplettierte Lagerstelle 19, bei welcher die Lagerschale 31 im Grundkörper 14 positioniert und das Radiallager 23, insbesondere eine Nadelkranz, an der Lagerstelle 19 angeordnet ist.

Die linke Lagerstelle 19 zeigt eine Montagereihenfolge zur Komplettierung der Lagerstelle 19. Die Lagerschale 31 kann beispielsweise zum Grundkörper 14 positioniert werden, so dass eine Stützfläche 32 der Lagerschale in etwa oder mit der Lauffläche 27 des Lagersitzes 31 fluchtet. Anschließend wird beispielsweise der Nadelkranz, der einen öffenbaren Nadelkäfig 24 umfasst, auf den Lagersitz 21 und die Lagerschale 31 aufgesetzt sowie anschließend der Nadelkäfig 24 geschlossen, wodurch die Lagerschale 31 lose zum Grundkörper 14 positioniert ist.

Die Figur 2 zeigt eine schematische Seitenansicht einer Ausgleichswelle 11 mit zwei Lagerstellen 19, die jeweils mit einer Lagerschale 31 und einem Radiallager 23 versehen sind.

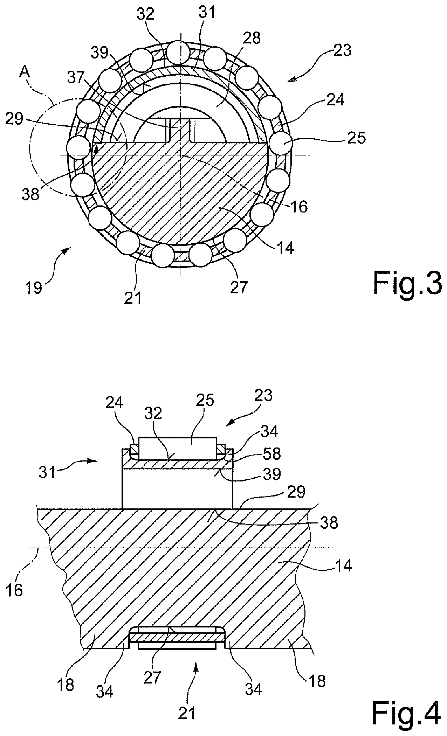

Die Figur 3 zeigt eine schematische Schnittansicht entlang der Linie II-II in Figur 2, und Figur 4 zeigt einen schematischen Längsschnitt der Lagerstelle 19.

An die Lagerstelle 19 grenzt unmittelbar ein rechter und linker Unwuchtgewichtsabschnitt 18 an, wodurch gegenüber der Lauffläche 27 des Lagersitzes 21 ein Radialvorsprung 34 ausgebildet ist, der im Ausführungsbeispiel - wie dies aus Figur 4 hervorgeht - gleichzeitig ein Teil des Unwuchtgewichtsabschnitts 18 ist. Alternativ kann vorgesehen sein, dass dieser Radialvorsprung 34 separat und getrennt zum Unwuchtgewichtsabschnitt 18 ausgebildet ist. Die Höhe des Radialvorsprungs 34 im Bereich des Lagersitzes 21 ist bevorzugt derart vorgesehen, dass der Nadelkäfig 24 in axialer Richtung durch die Radialvorsprünge 34, insbesondere daran ausgebildeten axialen Ringflächen 58, geführt ist. Die Tiefe der Lauffläche 27 gegenüber einer Außenumfangsfläche des Unwuchtgewichtsabschnitts 18 beziehungsweise die Höhe des Radialvorsprungs 34 ist bevorzugt derart bemessen, dass einerseits eine Führung für das Nadelkäfig 24 gegeben ist, jedoch andererseits die Wälzkörper 25 geringfügig gegenüber einer radialen Stirnseite des Radialvorsprungs 34 hervorstehen.

Die vertiefte Anordnung der Lauffläche 27 des Lagersitzes 21 kann in Abhängigkeit der verwendeten Art des Radiallagers 23 angepasst sein.

Die Lagerschale 31 weist gemäß dem dargestellten Ausführungsbeispiel ebenfalls Radialvorsprünge 34 auf, die beispielsweise eine Höhe beziehungsweise Radialerstreckung aufweisen, so dass wiederum der Nadelkäfig 24 axial gesichert und geführt ist, wie dies in Figur 4 dargestellt ist.

Aus der Schnittansicht gemäß Figur 3 geht hervor, dass sich der Lagersitz 21 über eine Umfangsfläche von mehr als 180° erstreckt, so dass die Rotationsachse 16 innerhalb des Grundkörpers 14 liegt. Zur Versteifung entlang der Rotationsachse 16 ist am Grundkörper 14 ein Steg 37 ausgebildet, der einer Durchbiegung während der Rotation der Ausgleichswelle 11 entgegen wirkt.

Bei dieser Ausgleichswelle 11 ist der gesamte Grundkörper 14 quasi halbiert, so dass nur eine Hälfte eines Rotationskörpers ausgebildet ist. Alternativ kann vorgesehen sein, dass die Bereiche zwischen den Unwuchtgewichtsabschnitten 18 der jeweiligen Lagerstelle als vollzylindrischer Körper ausgebildet sind und beispielsweise die Lagerstellen selbst im Bereich der Auflagefläche 29 eine Geometrie gemäß Figur 3 oder eine Vertiefung beziehungsweise Ausnehmung aufweisen, die sich in Richtung Lastzone unterhalb der Rotationsachse 16 erstrecken, so dass im Bereich der Lagerstelle 19 im Bereich der Rotationsachse 16 kein Material des Grundkörpers 14 ausgebildet ist.

Die Lagerschale 31 umfasst an deren jeweiligen Enden Aufstandsflächen 38, die zur Anlage auf der Auflagefläche 29 des Lagersitzes 21 kommen. Dabei sind bevorzugt jeweils plane Flächen vorgesehen, die sich gegenseitig abstützen beziehungsweise aufeinander aufliegen. Die Lagerschale 31 ist als Brücke ausgebildet, so dass zwischen einer Innenumfangsfläche 39, die der Stützfläche 32 gegenüber liegt, und der Auflagefläche 29 des Grundkörpers 14 ein Freiraum ausgebildet ist.

Alternativ zu der dargestellten Ausführungsform des Lagersitzes 21 der Lagerstelle 19 kann auch vorgesehen sein, dass die Lauffläche 27 des Lagersitzes 21 sich mit einem Umschlingungswinkel von 180° oder weniger als 180° erstreckt und entsprechend der Umfangswinkel der Lagerschale 31 angepasst ist.

Die Lagerschale 31 wird über das Radiallager 23 zum Grundkörper 14 der Ausgleichswelle 11 positioniert, wobei wiederum das Radiallager 23 durch den Lagersitz 21 in axialer Richtung zur Ausgleichswelle 11 positioniert wird. In radialer Richtung gesehen weist die Lagerschale 31 einen Umfangswinkel auf, welcher der Freinehmung 28 entspricht oder geringfügig geringer ausgebildet ist, so dass die Lagerschale 31 mit Spiel zum Grundkörper 14 positionierbar ist, jedoch über die Radialvorsprünge 34 eine axiale Sicherung zum Grundkörper 14 gegeben ist.

Gemäß einer nicht näher dargestellten alternativen Ausführungsform können die freien Enden der Lagerschale 31 Vorsprünge aufweisen, die in Vertiefungen in der Auflagefläche 29 eingreifen, so dass durch diese Vorsprünge der Lagerschale 31 eine Positionierung der Lagerschale 31 zum Grundkörper 14 in axialer Richtung ermöglicht, jedoch eine Befestigung nicht vorgesehen ist. Alternativ kann anstelle der Vorsprünge an den freien Enden der Lagerschale 31 eine ebene Aufstandsfläche 38 ausgebildet sein, die in eine Vertiefung in der Auflagefläche 29 des Grundkörpers 14 eingreift, so dass die gesamte Stirnseite des jeweiligen Endes der Lagerschale 31 zumindest in axialer Richtung oder vollständig gefangen ist, wobei die Lagerschale 31 immer noch frei nach oben abhebbar bleibt und durch das Radiallager 23 gesichert zur Lagerstelle 19 angeordnet ist. Bei diesen beiden alternativen Ausführungsformen oder einer Kombination hiervon können die Radialvorsprünge 34 zur seitlichen Begrenzung der Stützfläche 32 entfallen.

Die Lagerschale 31 besteht bevorzugt aus einem Kunststoff, gegebenenfalls mit einem zugesetzten Füllmaterial, um auch höheren Betriebstemperaturen und der Benetzung mit Schmiermittel Stand zu halten. Alternativ kann auch ein Sintermaterial oder ein metallisches Material eingesetzt werden.

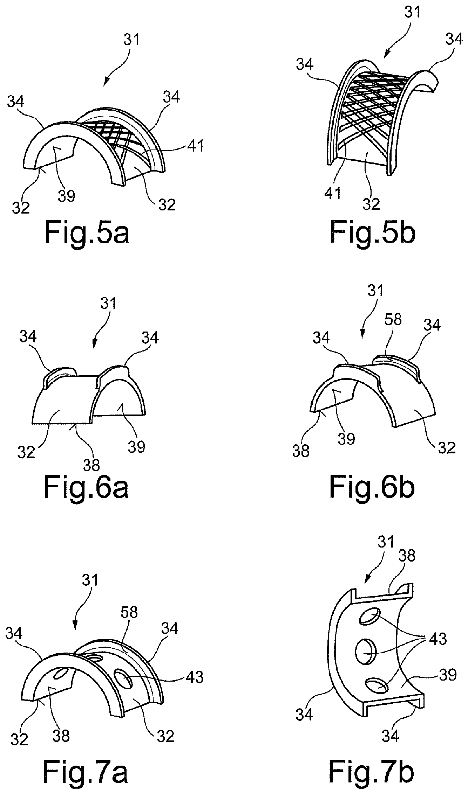

In den Figuren 5a und 5b sind perspektivische Ansichten einer ersten Ausführungsform der Lagerschale 31 dargestellt. Die Lagerschale 31 weist an der Stützfläche 32 Vertiefungen 41 auf, die beispielsweise durch eine Materialbearbeitung oder bei der Herstellung der Lagerschale 31, insbesondere beim Spritzgießen, gezielt eingebracht werden können. Dadurch erfolgt eine verbesserte Anhaftung des Schmiermittels oder des Schmiermittelnebels, wodurch eine verbesserte Schmierung und Verbesserung der Laufeigenschaft des Radiallagers gegeben ist. Alternativ zu dieser kreuzweise oder rautenförmig eingebrachten Struktur der Vertiefungen 41 kann auch eine raue Oberfläche, eine geriffelte Oberfläche oder eine Oberfläche mit Sicken oder dergleichen vorgesehen sein. In diesem Ausführungsbeispiel erstrecken sich die Radialvorsprünge 34 entsprechend dem Umfangswinkel der Stützflächen 32.

Im Ausführungsbeispiel gemäß den Figuren 6a und 6b erstrecken sich die Radialvorsprünge 34 nur teilweise entlang dem Umfangswinkel der Stützfläche 32. Beispielsweise sind im mittleren Bereich der Stützfläche 32 Radialvorsprünge 34 vorgesehen, die sich nur teilweise in Richtung auf die freien Enden der Lagerschale 31 erstrecken. Die Radialvorsprünge 34 sind beispielsweise symmetrisch einander gegenüber liegend angeordnet. Alternativ können die Radialvorsprünge 34 sich nur abschnittsweise entlang der Stützfläche 32 erstrecken und jeweils alternierend auf einer Seite der Stützfläche 32 vorgesehen sein.

In den Figuren 7a und 7b ist eine weitere alternative Ausführungsform der Lagerschale 31 dargestellt. Beispielsweise ist in der Stützfläche 32 eine Durchbrechung 43 vorgesehen, die ermöglicht, dass von der Innenumfangsfläche 39 aus Schmiermittel oder Schmiermittelnebel zur Stützfläche 32 gelangen kann. Es können mehrere Durchbrechungen 34 auch in verschiedenen Anordnungen möglich sein.

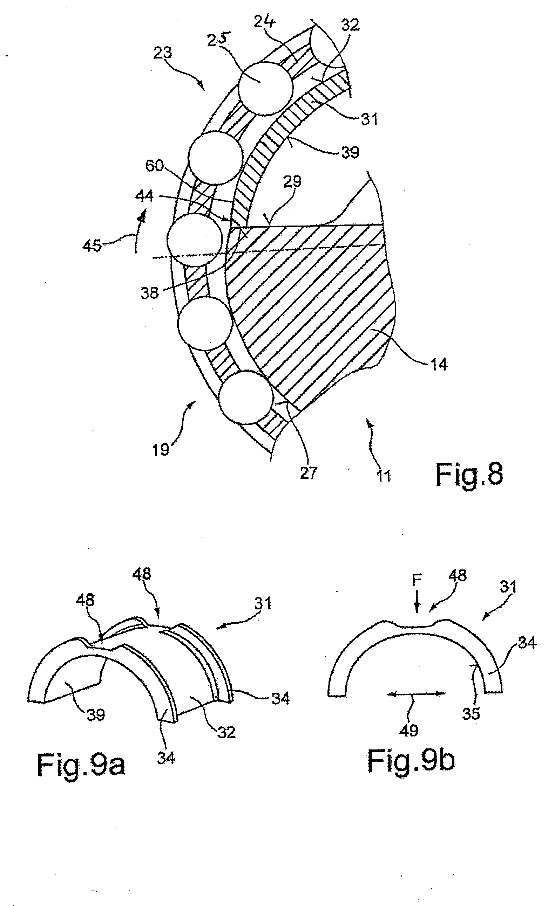

In Figur 8 ist eine schematisch vergrößerte Ansicht eines Bereichs A in Figur 3 als alternative Ausführungsform dargestellt. Bei der Ausführungsform gemäß Figur 3 ist vorgesehen, dass die Lauffläche 27 und die Stützfläche 32 aneinander angrenzen und ineinander übergehen. Bei der alternativen Ausführungsform gemäß Figur 8 ist vorgesehen, dass ein Endbereich der Lauffläche 27 und ein Einlaufbereich der Stützfläche 32 gegenüber einer Kreisbahn oder Umlaufbahn der Wälzkörper 25 eine zur Rotationsachse 16 weisende Krümmung 60 aufweisen und gegenüber der Kreisbahn zurück versetzt sind. Dadurch wird ein Übergangsbereich 44 geschaffen, der bei einer gemäß Pfeil 45 dargestellten Rotationsrichtung der Wälzkörper 25 ein weiches Einlaufen beziehungsweise Einrollen auf die Stützfläche 32 ermöglicht. Bei einer umgekehrten Rotationsrichtung gilt dies für ein sanftes Einlaufen der Wälzkörper 25 auf die Lauffläche 27. An der gegenüber liegenden Schnittstelle zwischen der Lauffläche 27 und der Stützfläche 32 ist die Wirkungsweise gegenüber der vorgeschriebenen Wirkungsweise vertauscht. Deshalb ist bevorzugt sowohl die Lauffläche 27 als auch die Stützfläche 32 jeweils im Endbereich mit einer stärkeren Krümmung versehen als der übrige Bereich der Lauffläche 27 und der Stützfläche 32, so dass diese zur Rotationsachse 16 hin zurück gesetzt sind und von der kreisförmigen Umlaufbahn der Wälzkörper 25 abweichen.

In Figur 9a ist eine perspektivische Ansicht einer alternativen Ausführungsform der Lagerschale 31 dargestellt. Figur 9b zeigt eine schematische Seitenansicht. Die Lagerschale 31 gemäß Figur 9a umfasst eine Stützfläche 32, welche in axialer Richtung durch Radialvorsprünge 34 begrenzt ist. Diese Radialvorsprünge 34 weisen jeweils eine Aussparung 48 auf, die in einem Bereich der Lagerschale 31 angeordnet ist, der der maximal wirkenden Last einer rotierenden Ausgleichswelle 11 gegenüberliegt. Die Aussparungen 48 sind im höchsten Punkt der Lagerschale 31 bzw. in einer 12-Uhr-Position angeordnet. Die Übergänge von dem Radialvorsprung 34 zur Stützfläche 32 und wieder zur Stützfläche 34 sind bevorzugt gerundet und fließend.

Aufgrund dieser Anordnung der Aussparungen 48 in einer 12-Uhr-Position ergibt sich beispielsweise folgende Wirkungsweise, welche anhand von Figur 9b näher erörtert wird. Durch die Aussparung 48 ist der Bereich, in welchem sich die Stützfläche 32 entlang der Aussparung 48 erstreckt gegenüber den benachbarten Bereichen weich ausgebildet, so dass eine Art Gelenk ausgebildet ist. Sofern beispielsweise eine Kraft F im Bereich der Aussparung 48 auf die Lagerschale 31 wirkt, erfolgt eine Aufspreizung der freien Enden der Lagerschale 31, deren Aufspreizrichtung gemäß Pfeil 49 dargestellt ist. Diese Aufspreizbewegung liegt im µm-Bereich, jedoch genügt dies, um die Wirkung zu erzielen, dass ein Übergang von der Lagerschale 31 auf den Grundkörper 14 gegeben ist, der einen sanften Einlauf der Wälzkörper 25 ermöglicht.

Alternativ oder zusätzlich können weitere Aussparungen 48 in den Radialvorsprüngen 34 vorgesehen sein. Beispielsweise können weitere Aussparungen in der 10-Uhr- und 2-Uhr oder 11-Uhr- und 1-Uhr-Position vorgesehen sein. Diese sind vorzugsweise immer symmetrisch zur 12-Uhr-Position ausgerichtet.

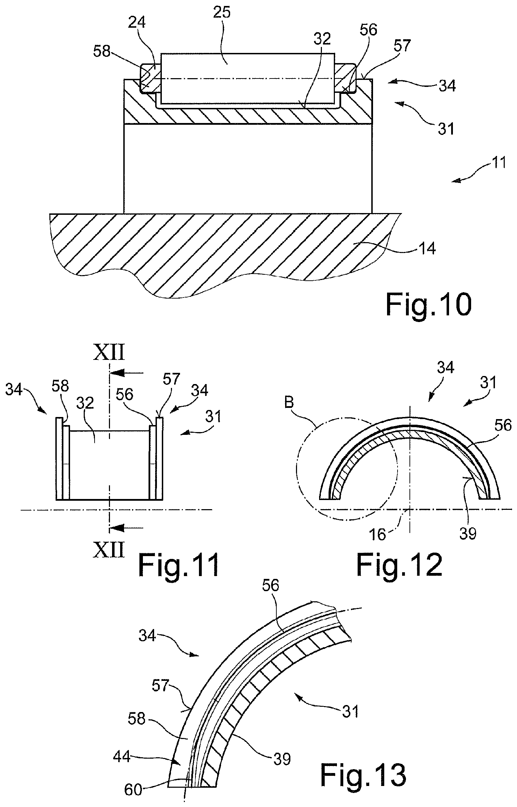

In Figur 10 ist eine schematische Schnittdarstellung einer weiteren alternativen Ausführungsform der Lagerschale 31 dargestellt. Diese Lagerschale 31 weist einen gestuften Radialvorsprung 34 auf, der eine radial umlaufende Gleitfläche 56 umfasst. Diese Gleitfläche 56 ist zwischen der Stützfläche 32 und einer radialen Außenumfangsfläche 57 ausgebildet. Diese Gleitfläche 56 dient zur Auflage bzw. Abstützung des Nadelkäfigs 24, so dass sich die Wälzlagerung im Bereich der Freinehmung 28 über den Nadelkäfig 24 an der Lagerschale 31 abstützt bzw. über die Gleitfläche 56 und die dieser zugeordneten axialen Ringflächen 58 des Radialvorsprungs 34 geführt ist. Der radiale Abstand der Gleitfläche 56 zur Stützfläche 32 ist dabei derart bemessen, dass die Wälzkörper 25 bezüglich deren Umfangsfläche mit Abstand zur Stützfläche 32 angeordnet sind. Dadurch findet eine Gleitbewegung zwischen dem auf der Gleitfläche 56 aufliegenden Randbereich des Nadelkäfigs 24 und der Gleitfläche 56 als auch deren zugeordneten axialen Ringfläche 58 statt.

In Figur 11 ist eine schematische Seitenansicht der alternativen Ausführungsform der Lagerschale 31 gemäß Figur 10 dargestellt.

In Figur 12 ist eine weitere Schnittdarstellung entlang der Linie XII-XII der Figur 11 dargestellt. Die Gleitfläche 56 weist zum jeweiligen freien Ende der Lagerschale 31 einen Übergangsbereich 44 mit einer verstärkten, insbesondere parabolischen, Krümmung 60 auf, die von einer Umlaufbahn der Wälzkörper 25 abweicht. Dies ist vergrößert in Figur 13 dargestellt. Die Krümmung 60 der Gleitfläche 56 nimmt zum freien Ende hin zu und ist gegenüber der gestrichelt dargestellten Umlaufbahn in Richtung auf die Rotationsachse 16 versetzt. Dadurch wird ein verbessertes Einlaufen und Auflaufen des Nadelkäfigs 24 auf die Gleitfläche 56 ermöglicht.

Die vorbeschriebenen Merkmale sind jeweils für sich erfindungswesentlich und können beliebig miteinander kombinierbar sein.

## Patentansprüche

1. Ausgleichswelle zum Ausgleich von freien Massenkräften und/oder Massenmomenten einer Hubkolben-Brennkraftmaschine, mit einem Grundkörper (14), welcher wenigstens einen Unwuchtgewichtsabschnitt (16) und wenigstens eine Lagerstelle (19) aufweist, die einen Lagersitz (21) zur Lagerung eines Radiallagers (23) aufweist, wobei der Lagersitz (21) eine Lauffläche (27) aufweist, die sich nur teilweise über einen Umfang der Lagerstelle (19) erstreckt und eine Freinehmung (28) umfasst und die Lagerstelle (19) eine Lagerschale (31) mit einer Stützfläche (32) umfasst, welche zum Lagersitz (21) positioniert ist, **dadurch gekennzeichnet, dass** die Lagerschale (31) lose zum Lagersitz (21) am Grundkörper (14) durch das Radiallager (23) angeordnet ist.

2. Ausgleichswelle nach Anspruch 1, **dadurch gekennzeichnet, dass** die Lagerschale (31) durch eine befestigungsmittelfreie Anordnung zum Lagersitz (21) am Grundkörper (14) vorgesehen und durch das Radiallager (23) zur Lagerstelle (19) positioniert oder gehalten ist.

3. Ausgleichswelle nach Anspruch 1, **dadurch gekennzeichnet, dass** die Lagerschale (31) sich außerhalb einer Lastzone der Lagerstelle (19) über die Freinehmung (28) des Lagersitzes (21) erstreckt und vorzugsweise ein Umfangswinkel der Stützfläche (32) der Lagerschale (31) gleich oder kleiner als ein Umfangswinkel der Freinehmung (28) des Lagersitzes (21) ist.

4. Ausgleichswelle nach Anspruch 1, **dadurch gekennzeichnet, dass** die Lauffläche (27) des Lagersitzes (21) und die Stützfläche (32) der Lagerschale (31) eine quasi geschlossene Lagerstelle (19) bilden.

5. Ausgleichswelle nach Anspruch 1, **dadurch gekennzeichnet, dass** die Stützfläche (32) der Lagerschale (31) in axialer Richtung durch zumindest einen Radialvorsprung (34) begrenzt ist, der sich zumindest teilweise entlang des Umfangswinkels der Lagerschale (31) erstreckt, und/oder dass die Lauffläche (27) des Lagersitzes (21) in axialer Richtung durch einen Radialvorsprung (34) begrenzt ist, der vorzugsweise Teil eines Unwuchtgewichtsabschnitts (18) ist.

6. Ausgleichswelle nach Anspruch 1, **dadurch gekennzeichnet, dass** die Stützfläche (32) der Lagerschale (31) eine raue Oberfläche, Sicken oder Vertiefungen (41) in der Oberfläche aufweist und/oder dass die Stützfläche (32) der Lagerschale (31) zumindest eine Durchbrechung (43) aufweist.

7. Ausgleichswelle nach Anspruch 1, **dadurch gekennzeichnet, dass** die Lagerschale (31) an den freien Enden eine Aufstandsfläche (38), insbesondere eine ebene Aufstandsfläche (38), zur Anlage am Grundkörper (14) aufweist.

8. Ausgleichswelle nach Anspruch 1, **dadurch gekennzeichnet, dass** die Lagerstelle (19) an den jeweiligen Endbereich der Lauffläche (27) des Lagersitzes (21) angrenzend eine Auflagefläche (29) am Grundkörper (14) aufweist.

9. Ausgleichswelle nach Anspruch 1, **dadurch gekennzeichnet, dass** zumindest eine oder zwei Unwuchtgewichtsabschnitte (18) unmittelbar an die Lagerstelle (19) angrenzen und die Laufflächen (27) des Lagersitzes (21) gegenüber einer Außenumfangsfläche des zumindest einen Unwuchtgewichtsabschnitts (18) derart vertieft ist, dass das Radiallager (23) radial zumindest geringfügig nach radial außen gegenüber der Außenumfangsfläche des zumindest einen Unwuchtgewichtsabschnitts (18) hervorsteht.

10. Ausgleichswelle nach Anspruch 1, **dadurch gekennzeichnet, dass** die freien Enden der Lagerschale (31) zumindest abschnittsweise in einer Vertiefung, insbesondere taschenförmigen Vertiefung, der Auflagefläche (29) des Grundkörpers (14) positionierbar, insbesondere in axialer Richtung fixierbar, sind und vorzugsweise die Lagerschale (31), welche mit deren freiem Ende in der Vertiefung der Auflagefläche (38) positionierbar ist, eine Stützfläche (32) aufweist, die frei von Radialvorsprüngen (34) ist.

11. Ausgleichswelle nach Anspruch 10, **dadurch gekennzeichnet, dass** das Radiallager (23) als Gleitlagerung ausgebildet ist und vorzugsweise aus geteilten Gleitlagerschalen besteht.

12. Ausgleichswelle nach Anspruch 1, **dadurch gekennzeichnet, dass** das Radiallager (23) als Wälzlagerung, insbesondere als Nadellager ohne Innenring oder als Nadelkranz, ausgebildet ist und vorzugsweise einen öffenbaren Nadelkäfig (24) aufweist, der insbesondere aus Kunststoff besteht.

13. Ausgleichswelle nach Anspruch 12, **dadurch gekennzeichnet, dass** der Nadelkäfig (24) der Wälzlagerung durch die Radialvorsprünge (34) des Lagersitzes (21) in axialer Richtung zum Grundkörper (14) geführt ist und vorzugsweise die Lagerschale (31) über deren Radialvorsprünge (34) durch den Nadelkäfig (24) positioniert gehalten ist.

14. Ausgleichswelle nach einem der Ansprüche 1 bis 10, **dadurch gekennzeichnet, dass** die Lagerschale (31) zumindest in dem der maximal wirkenden Last in der Lastzone gegenüberliegenden Bereich, insbesondere in einer 12-Uhr-Position, eine Aussparung (48) zur Unterbrechung der Radialvorsprünge (34) aufweist.

15. Ausgleichswelle nach Anspruch 12, **dadurch gekennzeichnet, dass** in einem Übergangsbereich (44) zwischen dem Lagersitz (21) und der Lagerschale (31) die Stützfläche (32) und Lauffläche (27) gegenüber einer Umlaufbahn der Wälzkörper (25) eine zur Rotationsachse (16) weisende Krümmung (60), vorzugsweise parabelförmige Krümmung, vorgesehen ist, die gegenüber der Umlaufbahn der Wälzkörper (25) zurück gesetzt sind und das jeweilige Ende beziehungsweise der jeweilige Beginn der Lauffläche (27) beziehungsweise der Stützfläche (32) gegenüber der Umlaufbahn der Wälzkörper (25) zurück gesetzt sind.

16. Ausgleichswelle nach Anspruch 12, **dadurch gekennzeichnet, dass** die Lagerschale (31) einen gestuften Radialvorsprung (32) mit einer radial ausgerichteten Gleitfläche (56) aufweist, auf der ein Randbereich des Nadelkäfigs (24) aufliegt und vorzugsweise die Gleitfläche (56) in einem Abstand zur Stützfläche (32) vorgesehen ist, so dass die Wälzkörper (25) der Wälzlagerung mit Abstand zur Stützfläche (32) angeordnet sind, und/oder in einem Übergangsbereich (44) zwischen dem Lagersitz (21) und der Lagerschale (31) die Gleitfläche (56) des Radialvorsprungs (34) gegenüber einer Umlaufbahn der Wälzkörper (25) eine zur Rotationsachse (16) weisende Krümmung (60) aufweist, die gegenüber der Umlaufbahn der Wälzkörper (25) zurückgesetzt ist.

## Claims

1. A balancing shaft for compensating free inertia forces and/or inertia torques of a reciprocating piston internal combustion engine, said shaft having a main body (14) which has at least one unbalanced weight portion (16) and at least one bearing (19) having a bearing seat (21) for supporting a radial bearing (23), said bearing seat (21) having a running face (27) that extends only partially along a periphery of the bearing (19) and comprises a clearance (28), and said bearing (19) comprising a bearing shell (31) including a supporting surface (32) which is positioned with respect to the bearing seat (21), **characterised in that** the bearing shell (31) is loosely arranged with respect to the bearing seat (21) on the main body (14) by means of said radial bearing (23).

2. The balancing shaft as claimed in claim 1, **characterised in that** the bearing shell (31) is arranged with respect to the bearing seat (21) on the main body (14) without any fastening means and is positioned or held in place with respect to the bearing (19) by means of the radial bearing (23).

3. The balancing shaft as claimed in claim 1, **characterised in that** the bearing shell (31) extends across the clearance (28) of the bearing seat (21) outside a load zone of the bearing (19) and **in that** preferably a peripheral angle of the supporting surface (32) of the bearing shell (31) is equal to, or smaller than, a peripheral angle of the clearance (28) of the bearing seat (21).

4. The balancing shaft as claimed in claim 1, **characterised in that** the running face (27) of the bearing seat (21) and the supporting surface (32) of the bearing shell (31) together form a quasi-closed bearing (19).

5. The balancing shaft as claimed in claim 1, **characterised in that** the supporting surface (32) of the bearing shell (31) is delimited, as seen in an axial direction, by at least one radial protrusion (34) extending at least partially along the peripheral angle of the bearing shell (31) and/or **in that** the running face (27) of the bearing seat (21) is delimited, as seen in an axial direction, by a radial protrusion (34) which is preferably part of the unbalanced weight portion (18) .

6. The balancing shaft as claimed in claim 1, **characterised in that** the supporting surface (32) of the bearing shell (31) is provided with a rough surface, with reinforcement beads or depressions (41) formed in its surface and/or **in that** the supporting surface (32) of the bearing shell (31) has at least one aperture (43) formed therein.

7. The balancing shaft as claimed in claim 1, **characterised in that** on its free ends, the bearing shell (31) has a standing surface (38), in particular a flat standing surface (38), for abutment on the main body (14).

8. The balancing shaft as claimed in claim 1, **characterised in that** adjacent to the respective end region of the running face (27) of the bearing seat (21), the bearing (19) has a support surface (29) formed on the main body (14).

9. The balancing shaft as claimed in claim 1, **characterised in that** at least one, or two, unbalanced weight portions (18) directly adjoin the bearing (19) and **in that** the running face (27) of the bearing seat (21) is recessed from an outer circumferential surface of the at least one unbalanced weight portion (18) in such a manner that the radial bearing (23) will at least slightly protrude radially outwardly from said outer circumferential surface of the at least one unbalanced weight portion (18).

10. The balancing shaft as claimed in claim 1, **characterised in that** at least portions of the free ends of the bearing shell (31) may be positioned, in particular fixed in a radial direction, within a depression, in particular a pocket-shaped depression, of the support surface (29) of the main body (14), and **in that** preferably the bearing shell (31) the free end of which is positionable in the depression of the support surface (38) has a supporting surface (32) which is free from radial protrusions (34).

11. The balancing shaft as claimed in claim 10, **characterised in that** the radial bearing (23) is realised as a plain bearing and preferably consists of divided plain bearing shells.

12. The balancing shaft as claimed in claim 1, **characterised in that** the radial bearing (23) is realised as a rolling bearing, in particular a needle roller bearing without an inner ring or as a needle bearing collar, and preferably has an openable needle bearing cage (24) made in particular of plastic material.

13. The balancing shaft as claimed in claim 12, **characterised in that** the needle bearing cage (24) of the rolling bearing is guided in an axial direction with respect to the main body (14) by the radial protrusion (34) of the bearing seat (21) and **in that** preferably the bearing shell (31) is held in position by the needle bearing cage (24) via its radial protrusions (34).

14. The balancing shaft as claimed in any one of claims 1 to 10, **characterised in that** the bearing shell (31) has a recess (48) for creating discontinuity in the radial protrusions (34), said recess being formed within the load zone at least in the region opposite to that of maximum action of load, in particular in a 12 o'clock position.

15. The balancing shaft as claimed in claim 12, **characterised in that** in a transition zone (44) between the bearing seat (21) and the bearing shell (31), the supporting surface (32) and the running face (27) have a curvature (60) with respect to a trajectory of the rolling elements (25), in particular a parabolic curvature, which points towards the rotation axis (16) and is recessed with respect to said trajectory of the rolling elements (25), and **in that** the respective end and the respective beginning of the running face (27) and/or the supporting surface (32) are recessed from the trajectory of the rolling elements (25).

16. The balancing shaft as claimed in claim 12, **characterised in that** the bearing shell (31) has a stepped radial protrusion (32) having a radially oriented sliding surface (56) on which a peripheral zone of the needle bearing cage (24) is rested, and **in that** preferably the sliding surface (56) is provided at a distance from the supporting surface (32) so that the rolling elements (25) of the rolling bearing are disposed at a distance from the support surface (32), and/or **in that** in a transition zone (44) between the bearing seat (21) and the bearing shell (31), the sliding surface (56) of the radial protrusion (34) has a curvature (60) with respect to a trajectory of the rolling elements (25) which points towards the rotation axis (16) and is recessed from said trajectory of the rolling elements (25).

## Revendications

1. Arbre d'équilibrage destiné à équilibrer des forces massiques et/ou couples massiques libres d'un moteur à combustion interne alternatif, pourvu d'un corps de base (14) qui présente au moins une partie de contrepoids (16) et au moins un point d'appui (19) qui présente un siège de palier (21) destiné à loger un palier radial (23), le siège de palier (21) présentant une surface de roulement (27) qui s'étend uniquement de manière partielle sur une circonférence du point d'appui (19) et comprenant un évidement (28), et le point d'appui (19) comprenant un coussinet de palier (31) pourvu d'une surface de support (32) qui est positionnée par rapport au siège de palier (21), **caractérisé en ce que** le coussinet de palier (31) est disposé librement, grâce au palier radial (23), par rapport au siège de palier (21) au niveau du corps de base (14) .

2. Arbre d'équilibrage selon la revendication 1, **caractérisé en ce que** le coussinet de palier (31) est prévu, sans moyen de fixation, par rapport au siège de palier (21) au niveau du corps de base (14), et est positionné ou maintenu par rapport au point d'appui (19) par le palier radial (23).

3. Arbre d'équilibrage selon la revendication 1, **caractérisé en ce que** le coussinet de palier (31) s'étend par-dessus l'évidement (28) du siège de palier (21), à l'extérieur d'une zone de charge du point d'appui (19), et **en ce qu'**un angle inscrit de la surface de support (32) du coussinet de palier (31) est de préférence égal ou inférieur à un angle inscrit de l'évidement (28) du siège de palier (21).

4. Arbre d'équilibrage selon la revendication 1, **caractérisé en ce que** la surface de roulement (27) du siège de palier (21) et la surface de support (32) du coussinet de palier (31) forment un point d'appui (19) quasiment fermé.

5. Arbre d'équilibrage selon la revendication 1, **caractérisé en ce que** la surface de support (32) du coussinet de palier (31) est délimitée en direction axiale par au moins une saillie radiale (34) qui s'étend au moins partiellement le long de l'angle inscrit du coussinet de palier (31) et/ou **en ce que** la surface de roulement (27) du siège de palier (21) est délimitée en direction axiale par une saillie radiale (34) qui fait de préférence partie d'une partie de contrepoids (18).

6. Arbre d'équilibrage selon la revendication 1, **caractérisé en ce que** la surface de support (32) du coussinet de palier (31) présente une surface rugueuse, des nervures ou des creux (41) au niveau de sa surface, et/ou **en ce que** la surface de support (32) du coussinet de palier (31) présente au moins une perforation (43).

7. Arbre d'équilibrage selon la revendication 1, **caractérisé en ce que** le coussinet de palier (31) présente, aux extrémités libres, une surface de contact (38), en particulier une surface de contact (38) plane, destinée à prendre appui contre le corps de base (14).

8. Arbre d'équilibrage selon la revendication 1, **caractérisé en ce que** le point d'appui (19) présente, de manière contiguë aux parties d'extrémité respectives de la surface de roulement (27) du siège de palier (21), une surface d'appui (29) située sur le corps de base (14).

9. Arbre d'équilibrage selon la revendication 1, **caractérisé en ce qu'**au moins une partie, ou deux parties de contrepoids (18) sont directement contiguës au point d'appui (19) et que la surface de roulement (27) du siège de palier (21) se trouve surbaissée par rapport à une surface circonférentielle extérieure de ladite au moins une partie de contrepoids (18) de telle sorte que le palier radial (23) fait saillie de manière radiale, et ce au moins légèrement en sens radial vers l'extérieur, par rapport à la surface circonférentielle extérieure de ladite au moins une partie de contrepoids (18).

10. Arbre d'équilibrage selon la revendication 1, **caractérisé en ce que** les extrémités libres du coussinet de palier (31) peuvent être positionnées, en particulier fixées en direction axiale, au moins en partie dans un creux, en particulier dans un creux en forme de poche, de la surface d'appui (29) du corps de base (14), et **en ce que** le coussinet de palier (31) qui peut être positionné grâce à son extrémité libre dans le creux de la surface d'appui (38) présente de préférence une surface de support (32) qui est exempte de saillies radiales (34).

11. Arbre d'équilibrage selon la revendication 10, **caractérisé en ce que** le palier radial (23) est formé en tant que palier lisse et est constitué de préférence par des coussinets de palier lisses en deux parties.

12. Arbre d'équilibrage selon la revendication 1, **caractérisé en ce que** le palier radial (23) est formé en tant que palier à roulement, en particulier en tant que palier à aiguilles sans bague intérieure ou en tant que couronne à aiguilles, et présente de préférence une cage à aiguilles (24) ouvrable qui est en particulier constituée en matière plastique.

13. Arbre d'équilibrage selon la revendication 12, **caractérisé en ce que** la cage à aiguilles (24) du palier à roulement est guidée en direction axiale par rapport au corps de base (14) par les saillies radiales (34) du siège de palier (21), et **en ce que** le coussinet de palier (31) est de préférence maintenu en position à l'aide de ses saillies radiales (34) par la cage à aiguilles (24).

14. Arbre d'équilibrage selon l'une quelconque des revendications 1 à 10, **caractérisé en ce que** le coussinet de palier (31) présente, au moins dans la partie de la zone de charge opposée à celle où la charge agit de manière maximale, en particulier à 12 heures, une entaille (48) destinée à interrompre les saillies radiales (34).

15. Arbre d'équilibrage selon la revendication 12, **caractérisé en ce que** la surface de support (32) et la surface de roulement (27) présentent, dans une zone de transition (44) entre le siège de palier (21) et le coussinet de palier (31), une courbure (60), de préférence une courbure parabolique, qui est, par rapport à une trajectoire des corps de roulement (25), tournée vers l'axe de rotation (16) et laquelle se trouve en retrait par rapport à la trajectoire desdits corps de roulement (25), et que l'extrémité finale respective ou l'extrémité initiale respective de la surface de roulement (27) ou de la surface de support (32) se trouvent donc en retrait par rapport à la trajectoire des corps de roulement (25).

16. Arbre d'équilibrage selon la revendication 12, **caractérisé en ce que** le coussinet de palier (31) présente une saillie radiale (32) étagée pourvue d'une surface de glissement (56) orientée de manière radiale sur laquelle repose une zone périphérique de la cage à aiguilles (24), et **en ce que** la surface de glissement (56) est prévue de préférence de manière à présenter un espacement par rapport à la surface de support (32) de sorte que les corps de roulement (25) du palier de roulement sont disposés à une distance donnée de ladite surface de support (32), et/ou **en ce que**, dans une zone de transition (44) entre le siège de palier (21) et le coussinet de palier (31), la surface de glissement (56) de la saillie radiale (34) présente, par rapport à une trajectoire (56) des corps de roulement (25), une courbure (60) tournée vers l'axe de rotation (16) laquelle se trouve en retrait par rapport à la trajectoire des corps de roulement (25).
